# EUROPÄISCHE PATENTSCHRIFT

(11) **EP 0 802 522 B1**
(45) Veröffentlichungstag und Bekanntmachung des Hinweises auf die Patenterteilung: **19.09.2001**
(21) Anmeldenummer: 97105640.3
(22) Anmeldetag: 04.04.1997
(51) Int. Cl.: G10L 15/22

(54) **Anordnung und Verfahren zur Aktionsermittlung, sowie Verwendung der Anordnung und des Verfahrens**
Apparatus and process to ascertain an action, and use of the apparatus and the process
Appareil et procédé pour déterminer une action, et utilisation de l'appareil et du procédé

(30) Priorität: 19.04.1996 DE 19615693
(43) Veröffentlichungstag der Anmeldung: 22.10.1997
(73) Patentinhaber: SIEMENS AKTIENGESELLSCHAFT, 80333 München (DE)
(72) Erfinder: Block, Hans-Ulrich, Dr., 81675 München (DE)

(56) Entgegenhaltungen:
- EP-A- 0 118 187
- EP-A- 0 382 871
- US-A- 4 689 737

## Beschreibung

Hintergrundsysteme können aus Benutzersicht häufig als eine Menge von möglichen Aktionen aufgefaßt werden, zu deren Ausführung eine Menge von Parametern bekannt sein muß. Bei der Bedienung solcher Systeme muß der Benutzer die Aktion und die Parameter dem System mitteilen.

Anordnungen zur Aktionsermittlung, beispielsweise Auskunftsysteme, wählen aufgrund von Informationen, die ein Benutzer der Anordnung übergibt, die gesuchte Aktion aus und führen diese aus. Zur Ermittlung der Information ist es teilweise nötig, mit dem Benutzer einen Dialog durchzuführen, falls die von dem Benutzer übergebene Information nicht ausreicht, die eigentlich gesuchte Information zu ermitteln.

Es sind verschiedene Anordnungen und Verfahren zur Dialoggestaltung bzw. für das entsprechende Dialogsystem, womit eine Anordnung zur Ermittlung von Information unter Verwendung eines zusätzlichen Dialogs zwischen der Anordnung und dem Benutzer bezeichnet wird, bekannt.

Aus dem Dokument [1] ist ein Verfahren zur Dialoggestaltung bekannt, bei dem der jeweilige Dialog mit einem endlichen Automaten oder auch mit vorgegebenen Dialogmenüs modelliert wird. Hierbei wird zu jeder Anwendung ein Verzweigungsbaum erstellt. Die zur Verzweigung notwendige Information wird vom Benutzer abgefragt. Dabei ist es beispielsweise üblich, feste Dialogbäume einzurichten.

Ferner ist eine Anordnung und ein Verfahren zur Dialoggestaltung unter Verwendung eines natürlichsprachlichen Dialogs aus dem Dokument [2] bekannt. Dialogsysteme dieser Art erlauben dem Benutzer, seinen Wunsch in Umgangssprache zu formulieren, beispielsweise: "Ich möchte morgen von München nach Hamburg fahren." In natürlichsprachlichen Dialogsystemen wird die Äußerung des Benutzers syntaktisch und semantisch analysiert. Das Ergebnis ist eine formale semantische Repräsentation des Äußerungsinhalts. Aus der semantischen Repräsentation der Äußerung wird ermittelt, welche Aktion der Benutzer starten möchte, und welche Parameter er bereits genannt hat. Hieraus ermittelt das Dialogsystem, welche Parameter noch zur Durchführung der Aktion bekannt gemacht werden müssen und stellt eine entsprechende Rückfrage, z.B.: "Möchten Sie fliegen oder mit der Bahn fahren?". Die Antwort des Benutzers wird wieder syntaktisch/semantisch analysiert. Aus der semantischen Repräsentation wird der gesuchte Parameter ermittelt.

Bei diesem Verfahren bzw. Dialogsystem, das aus dem Dokument [2] bekannt ist, werden grundsätzlich zwei unterschiedliche Ansätze unterschieden.

Aus dem Dokument [3] sind ein Verfahren und ein Dialogsystem bekannt, bei denen ein universell einsetzbares Analysemodul verwendet wird, welches im Idealfall in der Lage sein sollte, jede Äußerung syntaktisch und semantisch zu analysieren und eine kanonische semantische Repräsentation der wörtlichen Bedeutung zu liefern. Zur Dialoggestaltung kommt eine sogenannte Reasoning-Komponente zum Einsatz, die zum einen den Dialogverlauf protokolliert und zum anderen die zur Aktionsermittlung noch notwendigen Parameter ermittelt und zum anderen die kanonische semantische Repräsentation auf eine eventuelle Hintergrundanwendung abbildet. Zur Abbildung der kanonischen semantischen Repräsentation werden auf die Hintergrundanwendung üblicherweise Methoden der Wissensrepräsentation und Wissensverarbeitung eingesetzt.

Aus dem Dokument [4] ist ein weiterer Ansatz bekannt, bei dem sog. "semantische Grammatiken" für jede denkbare Benutzeräußerung entwickelt werden, die die Äußerung direkt, d.h. ohne Umweg über die Syntax, in eine semantische Repräsentation überführen. Die Dialoggestaltung und die Abbildung auf die Hintergrundanwendung, die eventuell vorgesehen ist, erfolgt üblicherweise in derselben Weise, wie dies oben beschrieben wurde bei dem Verfahren und dem Dialogsystem aus dem Dokument [3].

Die bekannten Verfahren bzw. die Dialogsysteme weisen eine Vielzahl von Nachteilen auf.

Das in dem Dokument [1] beschriebene Verfahren bzw. Dialogsystem ist zwar sehr robust, weist jedoch den Nachteil auf, daß es dem Benutzer keinerlei Freiheitsgrade in der Dialogführung überläßt. Darüberhinaus muß bei der Erweiterung des Dialogsystems bzw. des Verfahrens um eine neue Aktion der gesamte bestehende Verzweigungsbaum untersucht und ggf. umgestaltet werden, um die neue Aktion an entsprechender Stelle zu berücksichtigen. Dies bedeutet einen erheblichen Aufwand, der sehr hohe Kosten verursacht. Aus diesem Grund ist das Verfahren bzw. Dialogsystem aus dem Dokument [1] sehr unflexibel und nur unter erhöhtem Aufwand erweiterbar.

Der aus dem Dokument [3] bekannte Ansatz weist vor allem den Nachteil auf, daß es bei diesem Ansatz noch nicht gelungen ist, eine Grammatik einer natürlichen Sprache zu entwickeln, die in der Lage ist, alle möglichen Äußerungen eines Benutzers zu analysieren. Damit ist dieses Verfahren und das entsprechende Dialogsystem nicht robust. Darüber hinaus ist es mit großem Aufwand verbunden, die Abbildung der generischen Bedeutungsrepräsentation auf die Hintergrundanwendung berreitzustellen. Auch ist dieser Ansatz, ebenso wie der in dem Dokument [4] beschriebene Ansatz sehr komplex und somit aufwendig durchzuführen bzw. zu realisieren, was zu hohen Kosten dieser beiden Ansätze führt. Auch die Erweiterbarkeit und somit die Flexibilität sind bei diesen Ansätzen nur in sehr beschränktem Ausmaß gegeben.

Bei der Erweiterbarkeit ist insbesondere zu berücksichtigen, daß für jede neue Anwendung ein erheblicher Aufwand in die Entwicklung der Grammatiken investiert werden muß und diese Arbeiten nur von sehr qualifizierten Personal durchgeführt werden können. Somit sind die Ansätze aus den Dokumenten [3] und [4] für die meisten Anwendungen unverhältnismäßig aufwendig, auch wenn der aus dem Dokument [4] bekannte Ansatz im allgemeinen robuster ist als der bekannte Ansatz aus dem Dokument [3], da bei der Entwicklung der semantischen Grammatik nur die in der speziellen Anwendung möglichen Benutzeräußerungen betrachtet werden müssen.

Somit liegt der Erfindung das Problem zugrunde, eine Anordnung und ein Verfahren anzugeben, welches die obengenannten Nachteile bekannter Anordnungen und Verfahren vermeiden.

Dieses Problem wird durch die Anordnung gemäß Patentanspruch 1 sowie durch das Verfahren gemäß Patentanspruch 12 gelöst.

Bei der Anordnung ist ein Eingabemittel zur Eingabe von Aktionsinformation vorgesehen. Die Aktionsinformation wird von dem Benutzer über das Eingabemittel in die Anordnung eingegeben und die Aktionsinformation wird in einem vorgesehenen Eingabespeicher gespeichert. Ferner ist eine Aktionsermittlungseinheit vorgesehen, die derart ausgestaltet ist, daß aus der digitalen Aktionsinformation aus einer Vielzahl von vorgebbaren Aktionen mindestens eine Aktion bestimmt wird, auf die durch den Aktionshinweis hingewiesen wird. Die Aktionsermittlungseinheit ist weiterhin derart ausgestaltet, daß eine erste Menge von Aktionen gebildet wird, in der die Aktionen gespeichert werden, bei denen alle Aktionshinweise mit mindestens einem Teil von vorgebbaren Schlüsselbegriffen übereinstimmen, die einer Aktion zugeordnet sind und daß eine zweite Menge von Aktionen gebildet wird, in der die Aktionen gespeichert werden, bei denen mindestens ein Teil der Aktionshinweise mit mindestens dem Teil der vorgebbaren Schlüsselbegriffe übereinstimmen. Ferner ist ein Parameterparser vorgesehen, mit dem aus der Aktionsinformation Aktionsparameter ermittelt werden. Weiterhin ist eine Informationsdatenbank vorgesehen, aus der die gesuchte Information anhand der Aktion sowie der Aktionsparameter ermittelt wird.

Bei dem erfindungsgemäßen Verfahren wird die digitale Aktionsinformation von einem Benutzer über ein Eingabemittel in die Anordnung zur Aktionsermittlung eingegeben. Die Aktioninformation wird in einem Eingabespeicher gespeichert. Aus vorgebbaren Aktionen werden unter Verwendung der eingegebenen Aktionshinweise mindestens eine Aktion ermittelt. Es wird eine erste Menge von Aktionen ermittelt und gespeichert, bei denen alle Aktionshinweise mit den Schlüsselbegriffen übereinstimmen. Weiterhin wird eine zweite Menge von Aktionen ermittelt und gespeichert, bei denen mindestens ein Teil der Aktionshinweise mit den Schlüsselbegriffen übereinstimmen.Die erste Menge von Aktionen und/oder die zweite Menge von Aktionen wird als Grundlage zur eindeutigen Ermittlung der Aktion verwendet. Für die bestimmte Aktion werden mittels eines Parameterparsers Aktionsparameter aus der Aktionsinformation ermittelt. In einem letzten Schritt wird die ermittelte Aktion durchgeführt.

Die erfindungsgemäße Anordnung sowie das erfindungsgemäße Verfahren weist einige erhebliche Vorteile gegenüber dem Stand der Technik auf.

Durch die Aktionsermittlungseinheit sowie die Ermittlung der Aktion aus einer Vielzahl vorgebbarer Aktionen ist das Verfahren einfacher und schneller mit Hilfe eines Rechners durchführbar und die Anordnung ist einfacher gestaltet. Dies führt zu einer kostengünstigeren Realisierung der Anordnung bzw. zu einer kostengünstigeren Durchführung des Verfahrens, insbesondere bezüglich der benötigten Rechenzeit. Dies resultiert vor allem daraus, daß durch die Ermittlung der Aktion zu Beginn des Verfahrens und erst der anschließenden Ermittlung der entsprechenden Parameter für die jeweilige Aktion eine erhebliche Rechenzeiteinsparung erreicht wird.

Die Anordnung und das Verfahren zeichnen sich weiterhin dadurch aus, daß es auf sehr einfache Art und Weise möglich ist, aus einer Vielzahl vorgebbarer Aktionen eine Aktion zu bestimmen, und für diese Aktion die vorgegebenen Aktionsparameter zu ermitteln. Damit wird eine sehr einfache Anordnung zur Aktionsermittlung realisiert, die sehr flexibel gestaltet ist und auf sehr einfache Weise mit neuen Anwendungen und Aktionen erweiterbar ist, ohne daß spezielles, hochqualifiziertes und somit teures Personal eingesetzt werden muß.

Vorteilhafte Weiterbildungen der Erfindung ergeben sich aus den abhängigen Ansprüchen.

In einer Weiterbildung der erfindungsgemäßen Anordnung ist es vorgesehen, das Eingabemittel als Spracherkennungseinheit und/oder als taktile Eingabeinheit auszugestalten. Durch diese Ausgestaltung wird eine benutzerfreundliche Übergabe der Aktioninformation durch den Benutzer an die Anordnung zur Aktionsermittlung ermöglicht.

Weiterhin ist es vorteilhaft, eine Aktionsklärungseinheit vorzusehen zur Ermittlung weiterer Aktionshinweise von dem Benutzer. Dies ist vorteilhaft, falls in der Aktionsinformation nicht genügend Aktionshinweise enthalten sind, die zur eindeutigen Ermittlung einer Aktion aus der vorgegebenen Anzahl von Aktionen ausreichend sind.

In einer weiteren Ausgestaltung ist eine Parameterklärungseinheit vorgesehen zur Ermittlung weiterer Aktionsparameter für die mindestens eine ermittelte Aktion. Durch diese Weiterbildung wird es möglich, Fälle, bei denen nicht alle Aktionsparameter einer Aktion aus der digitalen Aktionsinformation ermittelt werden konnten, ohne größeren Aufwand zu bearbeiten, wodurch ein weiteres Anwendungsspektrum der Anordnung in einfacher Weise realisiert gegeben wird.

In einer weiteren Ausgestaltung der Anordnung ist es vorgesehen, die Aktionsermittlungseinheit derart auszugestalten, daß den vorgegebenen Aktionen Schlüsselbegriffe zugeordnet werden, die mit den Aktionshinweisen verglichen werden, und diejenigen Aktionen als tatsächliche Aktionen bestimmt werden, deren Schlüsselbegriffe mit dem Aktionshinweis bezüglich eines vorgebbaren Ähnlichkeitsmaßes am besten übereinstimmen. Mit dieser Ausgestaltung wird die Anordnung sehr einfach gehalten und somit ist diese Anordnung noch kostengünstiger realisierbar.

Um eine benutzerintuitive und flexiblere Anordnung zu realisieren, ist es vorteilhaft, in einer Ausgestaltung der Anordnung einen Schlüsselworteditor vorzusehen, durch den sowohl Schlüsselworte als auch Änderungen oder Erweiterungen von Aktionen und/oder Aktionsparametern durch den Benutzer oder einen Entwickler eingegeben werden können. Mit dem Schlüsselworteditor können ferner auch Anwendungen und Grammatiken,die im weiteren beschrieben werden, in einfacher Weise verändert, erweitert bzw. angepaßt werden.

Zur flexibleren Gestaltung der Anordnung ist es in einer Ausgestaltung vorteilhaft, ein Mittel zur Generierung von Fragen an den Benutzer zur Ermittlung weiterer Aktionshinweise und/oder weiterer Aktionsparameter vorzusehen.

In einer Ausgestaltung der Anordnung ist es ferner vorteilhaft, Information für die jeweilige Aktion anhand der Aktionsparameter und einer Informationsdatenbank zu ermitteln.

Zur Darstellung der ermittelten Information ist in einer Weiterbildung der Aktion der Anordnung eine Ausgabeinheit zur Darstellung der ermittelten Information für den Benutzer vorgesehen.

Des weiteren ist in einer Ausgestaltung der Anordnung eine Steuerungseinheit zur Steuerung einer Hintergrundanwendung unter Verwendung der ermittelten Information vorgesehen. Damit wird die Kopplung der Anordnung zur Aktionsermittlung mit verschiedensten Arten von Systemen, die im weiteren beschrieben werden, ermöglicht.

In einer Weiterbildung des erfindungsgemäßen Verfahrens ist es vorteilhaft, daß die Aktionsinformation durch den Benutzer eingesprochen wird, und dieser in einer Spracherkennungseinheit erkannt wird. Durch diese Weiterbildung wird die Interaktion der Anordnung zur Aktionsermittlung mit dem Benutzer wesentlich benutzerintuitiver, einfacher und somit schneller durchgeführt.

Ferner ist es in einer Weiterbildung des Verfahrens vorteilhaft, die Interaktion mit dem Benutzer über eine taktile Eingabeeinheit durchzuführen. Auch durch diese Weiterbildung wird die Durchführung des Verfahrens einfacher und benutzerintuitiver möglich.

Eine Flexibilisierung des Verfahrens wird durch die Weiterbildung erreicht, bei der für den Fall, daß der Aktionshinweis nicht zur eindeutigen Bestimmung einer Aktion ausreicht, weitere Aktionshinweise in einem vorgebbaren Dialog des Rechners mit dem Benutzer ermittelt werden.

In einer weiteren Ausgestaltung des erfindungsgemäßen Verfahrens ist es vorgesehen, für die Bestimmung der Aktion eine Vorgehensweise zu wählen, bei der den Aktionen Schlüsselbegriffe zugeordnet werden, und die Aktionshinweise mit den Schlüsselbegriffen verglichen werden und über den Vergleich die mindestens eine Aktion bestimmt wird. Diese Weiterbilduung ist durch ihre Einfachheit geprägt, was einen erheblichen Vorteil dieser Weiterbildung darstellt. Auch ist eine einfache Erweiterung von Schlüsselbegriffen für die jeweilige Aktion und somit auch eine einfache Änderung der entsprechenden Aktionen leicht möglich.

Ferner ist es in einer Weiterbildung des Verfahrens vorteilhaft, daß von dem Parameterparser die Aktionsparameter aus der Aktionsinformation in bezüglich der Eingabe umgekehrter Reihenfolge entwickelt werden, wodurch eine Korrektur der Äußerung des Benutzers innerhalb einer syntaktischen Einheit, also beispielsweise innerhalb eines Satzes, korrigiert werden kann und diese Korrektur auch ohne weiteres berücksichtigt werden kann.

Ferner ist es in einer Weiterbildung des Verfahrens vorteilhaft, in dem Verfahren eine Steuerung einer Hintergrundanwendung vorzusehen, wodurch ein weites Anwendungsspektrum des erfindungsgemäßen Verfahrens eröffnet wird.

Sowohl die Anordnung als auch das Verfahren sind in verschiedensten Anwendungsgebieten vorteilhaft einsetzbar. Eine Möglichkeit zur vorteilhaften Verwendung der Anordnung bzw. des Verfahrens ist in jeglicher Art von Telefondiensten oder auch Tele-Kauf-Systemen oder Tele-Banking-Systemen zu sehen.

Ferner ist die Anordnung bzw. das Verfahren vorteilhaft einsetzbar in sog. Messaging-Systemen von Nebenstellenanlagen einer Kommunikationsanlage.

Eine weitere vorteilhafte Verwendung ist in einem sog. Voice Mail Handling System zu sehen. Auch kann das Verfahren und die Anwendung sehr vorteilhaft zur Steuerung einer beliebigen Maschine, beispielsweise einer Werkzeugmaschine oder auch jeder anderen Maschine verwendet werden. Auch kann ein Rechner, insbesondere ein fensterbasiertes Eingabesystem eines Rechners sehr vorteilhaft mittels der Anordnung und dem Verfahren gesteuert werden.

Ein Ausführungsbeispiel ist in den Figuren dargestellt und wird im weiteren näher erläutert.

Es zeigen
Figur 1 in Form eines Blockdiagramms eine Skizze der erfindungsgemäßen Anordnung;
Figur 2 in Form eines Blockdiagramms eine Skizze der Anordnung mit einigen Weiterbildungen der Anordnung;
Figur 3 in Form eines Ablaufdiagramms einzelne Verfahrensschritte des erfindungsgemäßen Verfahrens;
Figur 4 in Form eines Ablaufdiagramms das Verfahren mit einigen Weiterbildungen;
Figur 5 in Form eines Blockdiagramms eine Übersicht über einige mögliche Verwendungen der Anordnung sowie des Verfahrens;
Figur 6 eine Skizze eines Benutzers und der Anordnung mit einigen Weiterbildungen, wodurch die Interaktion der Anordnung mit dem Benutzer dargestellt ist.

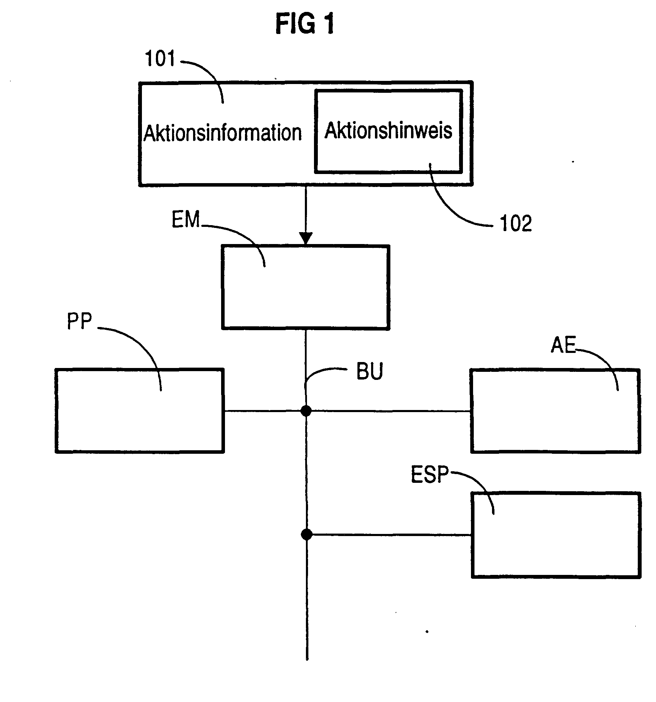

In Figur 1 ist eine Skizze der Anordnung dargestellt.

Die Anordnung A weist mindestens folgende Komponenten auf, die miteinander gekoppelt sind, beispielsweise über einen Bus BU:
- ein Eingabemittel EM,
- einen Eingabespeicher ESP,
- eine Aktionsermittlungseinheit AE,
- einen Parameterparser PP.

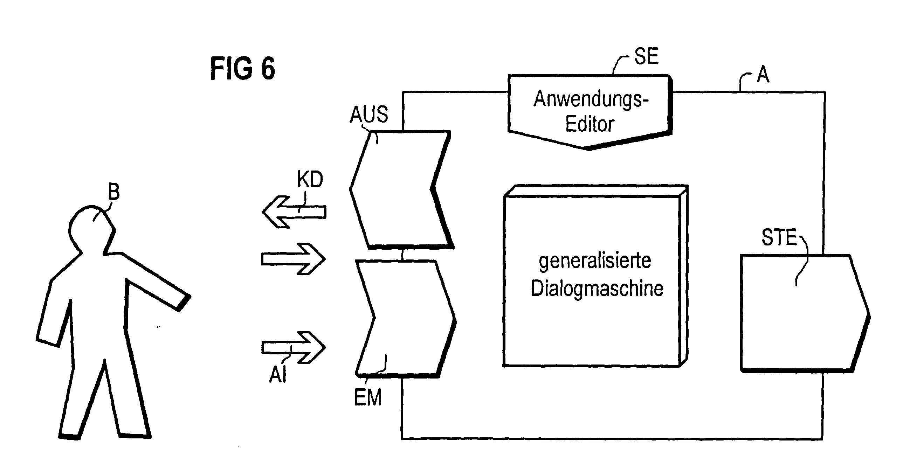

Ferner ist in Figur 1 symbolhaft in einem ersten Block 101 eine Aktionsinformation dargestellt. Die Aktionsinformation wird von einem Benutzer B (vergl. Figur 6) dem Eingabemittel EM übergeben, in der Anordnung A digitalisiert und als digitale Aktionsinformation in dem Eingabespeicher ESP gespeichert. Der Aktionshinweis ist in Form eines zweiten Blocks 102 symbolhaft ebenso in Figur 1 dargestellt.

In einer Ausgestaltung der Anordnung A ist es vorgesehen, daß das Eingabemittel EM als eine Spracherkennungseinheit, wie sie beispielsweise aus dem Dokument [5] bekannt ist, und/oder als eine taktile Eingabeeinheit realisiert ist. Unter einer taktilen Eingabeeinheit ist beispielsweise eine Tastatur, eine Computermaus oder auch ein sog. Touch Screen zu verstehen.

Die Arbeitsweise der einzelnen Komponenten der Anordnung A wird im Zusammenhang mit den Verfahren im weiteren detailliert erläutert.

Die Aktionsermittlungseinheit AE dient zum einen zur Ermittlung von Aktionshinweisen und zum anderen zur Ermittlung mindestens einer vorgebbaren Aktion, auf die durch den Aktionshinweis hingewiesen wird. Die Aktion wird aus einer beliebigen Anzahl vorgebbarer Aktionen ermittelt. Verschiedene Verfahrensweisen zur Ermittlung der gesuchten Aktion, auf die durch den Aktionshinweis hingewiesen wird, sind dem Fachmann bekannt. Einige beispielhaft dargelegte Möglichkeiten zu deren Realisierung werden jedoch im Zusammenhang mit dem Verfahren detailliert erläutert.

Der Parameterparser PP dient zur Ermittlung von Aktionsparametern, die jeder Aktion jeweils eindeutig zugeordnet sind, aus der in dem Eingabespeicher ESP gespeicherten digitalen Aktionsinformation.

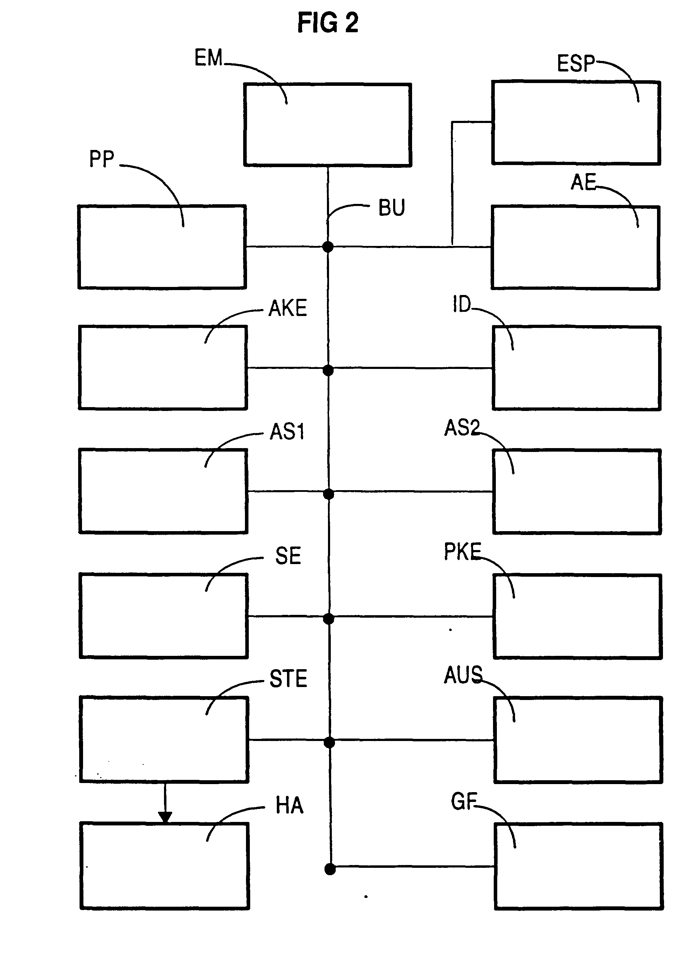

In Figur 2 ist die Anordnung A mit einigen Weiterbildungen der Anordnung A zur Aktionsermittlung dargestellt.

Eine in einer Ausgestaltung vorgesehene Informationsdatenbank ID enthält jeweils anwendungspezifisch gesuchte Information, die anhand der bestimmten Aktion und den anschließend für die Aktion ermittelten Aktionsparameter ermittelt wird.

Es ist in einer Weiterbildung eine Aktionsklärungseinheit AKE vorgesehen zur Ermittlung weiterer Aktionshinweise von dem Benutzer. Die Aktionsklärungseinheit AKE gewinnt vor allem in Anwendungsgebieten eine erhöhte Bedeutung, wenn es gilt, unter verschiedenen Aktionen die gesuchte Aktion zu ermitteln. Sind die Aktionshinweise, die von dem Benutzer B der Anordnung A übergeben werden, zur Bestimmung der Aktion nicht ausreichend, so wird die Aktionsklärungseinheit AKE zur Ermittlung weiterer Aktionshinweise von dem Benutzer B verwendet. Die Ausgestaltung der Aktionsklärungseinheit AKE wird im Zusammenhang mit dem Verfahren näher erläutert. Es ist jedoch nicht notwendig, daß die Aktionsklärungseinheit AKE genau eine Aktion ermittelt. Es ist ebenso vorgesehen, die Anzahl vorgegebener Aktionen in einer beliebigen Art zu reduzieren, um somit nur noch eine geringere Anzahl von Aktionen weiter zu verarbeiten.

In einer Weiterbildung ist eine Parameterklärungseinheit PKE vorgesehen zur Ermittlung weiterer Aktionsparameter von dem Benutzer B. Die Parameterklärungseinheit PKE wird verwendet, wenn für die mindestens eine ermittelte Aktion nicht alle Aktionsparameter, die den jeweiligen Aktionen zugeordnet sind, bestimmt werden können. Für diesen Fall ist es vorteilhaft, daß die Parameterklärungseinheit PKE verwendet wird, um fehlende Aktionsparameter von dem Benutzer B zu ermitteln.

In einer Weiterbildung der Anordnung A ist es ferner vorteilhaft, einen ersten Aktionsspeicher AS1 und/oder einen zweiten Aktionsspeicher AS2 vorzusehen. In dem ersten Aktionsspeicher AS1 werden Aktionen und deren Aktionsparameter gespeichert, bei denen der mindestens eine Aktionshinweis vollständig mit mindestens einem Teil von Schlüsselbegriffen, deren Bedeutung im weiteren beschrieben wird, übereinstimmt. In dem zweiten Aktionsspeicher AS2 werden Aktionen und deren Aktionsparameter gespeichert, bei denen mindestens einer der Aktionshinweise mit mindestens einem Schlüsselbegriff übereinstimmt.

Ferner ist in einer Weiterbildung ein Mittel GF zur Generierung von Fragen (prompts) an den Benutzer B zur Ermittlung weiterer Aktionshinweise und/oder weiterer Aktionsparameter vorgesehen. Der Aufbau des Mittels GF zur Generierung von Fragen ist beispielsweise aus dem Dokument [7] bekannt.

Ferner ist in einer Weiterbildung der Anordnung A eine Ausgabeeinheit AUS vorgesehen zur Ausgabe der ermittelten Information. Die Ausgabeeinheit AUS kann beispielsweise durch einen Bildschirm, einen Drucker oder weitere Arten von Ausgabeeinheiten realisiert sein. Die Ausgabeeinheit AUS kann außerdem als ein Lautsprecher oder als eine andere Form einer Sprachausgabeinheit realisiert sein. In diesem Falle ist zusätzlich eine Sprachsyntheseeinheit vorgesehen, mit der die digital vorliegende ermittelte Information in Sprachsignale umgewandelt wird, die dann dem Benutzer B ausgegeben wird. Es kann weiterhin in einer Variante vorgesehen sein, die sprachliche Ausgabe über sogenannte Audio-Dateien durchzuführen.

Ferner ist es in einer Weiterbildung der Anordnung A vorgesehen, eine Steuerungseinheit STE zur Steuerung einer Hintergrundanwendung HA unter Verwendung der ermittelten Information zu verwenden. Der Aufbau der Steuerungseinheit STE ist völlig anwendungspezifisch und dient lediglich dazu, die ermittelte Aktion zur Steuerung der Hintergrundanwendung HA zu verwenden. Die unterschiedlichen Verwendungsmöglichkeiten und somit auch die unterschiedlichen Ausgestaltungen der Steuerungseinheit STE werden im weiteren detailliert beschrieben.

Ferner ist in einer Weiterbildung ein Schlüsselbegriffeditor SE vorgesehen, mit dem zum einen die im weiteren beschriebenen Schlüsselbegriffe und zum anderen neue Aktionen und/oder Aktionsparameter verändert, entfernt oder hinzugefügt werden können.

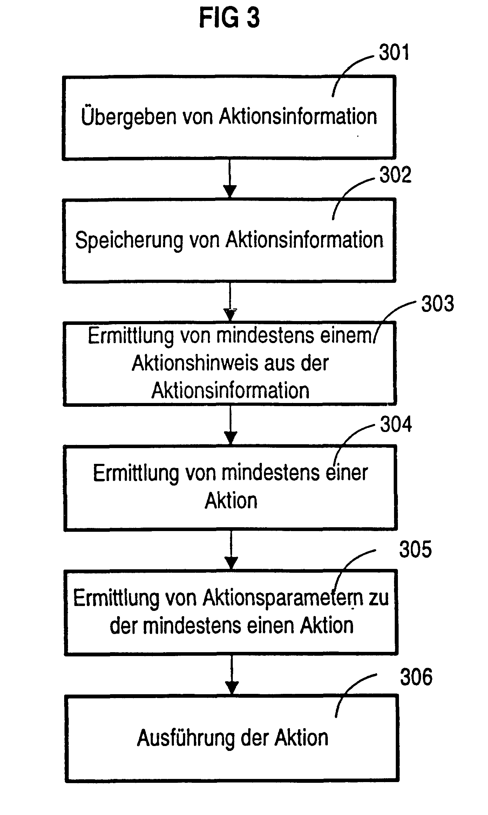

Die einzelnen Verfahrensschritte des Verfahrens sind in Figur 3 dargestellt.

In einem ersten Schritt 301 wird von dem Benutzer B der Anordnung A Aktionsinformation, die mindestens einen Aktionshinweis aufweist, übergeben. Das Verfahren muß nicht notwendigerweise mit der im vorigen beschriebenen Anwendung durchgeführt werden, es ist ebenso möglich, das Verfahren mit Hilfe eines Rechners durchzuführen.

Die Aktionsinformation wird von dem Benutzer B unter Verwendung des Eingabemittels EM an die Anordnung A oder den Rechner übergeben. Die Aktionsinformation wird digitalisiert und als digitalisierte Aktionsinformation gespeichert 302. Die digitale Aktionsinformation kann in einer Phonemdarstellung der auch in Form eines üblichen Codes zur Darstellung von Schriftzeichen (beispielsweise ASCII-Code) gespeichert werden.

In einem weiteren Schritt 303 wird aus der gespeicherten Aktionsinformation unter Verwendung des Parameterparses PP, dessen Aufbau aus dem Dokument [6] bekannt ist, mindestens ein Aktionshinweis ermittelt.

Unter Verwendung des Aktionshinweises und der Aktionsermittlungseinheit AE wird mindestens eine Aktion bestimmt 304.

Die Bestimmung der mindestens einen Aktion kann auf unterschiedliche Weise erfolgen. Eine sehr einfach, jedoch in keinster Weise ausschließlich verwendbare Methode liegt darin, jeder Aktion eine vorgebbare Anzahl von Schlüsselbegriffen, die jeweils die Aktion charakterisieren, zuzuordnen, und die aus der Aktionsinformation ermittelten Aktionsparameter, die durch den Parameterparser PP ermittelt werden, mit den Schlüsselbegriffen zu vergleichen. Der Vergleich kann durch einen direkten Wortvergleich oder auch durch einen beliebigen Mustervergleich, deren Algorithmen jedem Fachmann geläufig sind, erfolgen.

Es ist vorgesehen, zur Ermittlung der Aktion in der Aktionsermittlungseinheit AE folgende Schritte durchzuführen. In der Aktionsermittlungseinheit AE wird für jede Aktion der Vergleich der Schlüsselbegriffe mit den Aktionshinweisen durchgeführt.

Es wird eine erste Menge von Aktionen ermittelt, bei denen alle Aktionshinweise mit mindestens einem Teil der Schlüsselbegriffe übereinstimmen. Anschaulich beschrieben bedeutet diese Vorgehensweise, daß die Schnittmenge aller Aktionen, auf die durch die Aktionshinweise hingewiesen wurde, ermittelt wird. Die erste Menge von Aktionen wird beispielsweise in dem ersten Aktionsspeicher AS1 gespeichert.

Ferner wird eine zweite Menge von Aktionen gebildet, bei denen mindestens ein Teil der Aktionshinweise mit den Schlüsselbegriffen übereinstimmt. Diese Vorgehensweise bedeutet anschaulich eine Bildung der Vereinigungsmenge aller Aktionen, auf die hingewiesen wurde. Die zweite Menge von Aktionen wird beispielsweise in dem zweiten Aktionsspeicher AS2 gespeichert.

Enthält die erste Menge genau ein Element, so ist die zu ermittelnde Aktion eindeutig identifiziert. Für diesen Fall ist kein weiterer Klärungsdialog notwendig. Enthält die erste Menge jedoch mehr Elemente als die Anzahl von zu ermittelnden Aktionen, so ist die Aktion durch die initiale Benutzereingabe nicht genau genug beschrieben. In diesem Fall ist es vorteilhaft, einen im weiteren beschriebenen Klärungsdialog durchzuführen.

Ist die erste Menge eine leere Menge, so enthält die initiale Benutzeräußerung Hinweise auf disjunkte Aktionen. In diesem Fall wird vorteilhafterweise der Klärungsdialog durch die in der zweiten Menge enthaltenen Aktionen gesteuert.

Sind sowohl die erste Menge als auch die zweite Menge leere Mengen, so wird beispielsweise ein Klärungsdialog zur Unterscheidung aller in der Anwendung bekannten Aktionen durchgeführt.

Somit dienen die erste Menge und die zweite Menge in dieser Weiterbildung als Grundlage für den Dialog mit dem Benutzer B zur Ermittlung der mindestens einen Aktion.

Ist die mindestens eine Aktion ermittelt worden 304, werden für alle Aktionen die Aktionsparameter, die den Aktionen eindeutig zugeordnet sind, aus der digitalen Aktionsinformations mittels des Parameterparser PP ermittelt 305. Anhand der ermittelten Aktion sowie der zugehörigen Aktionsparameter wird nun in einem letzten Schritt 306 die Aktion durchgeführt.

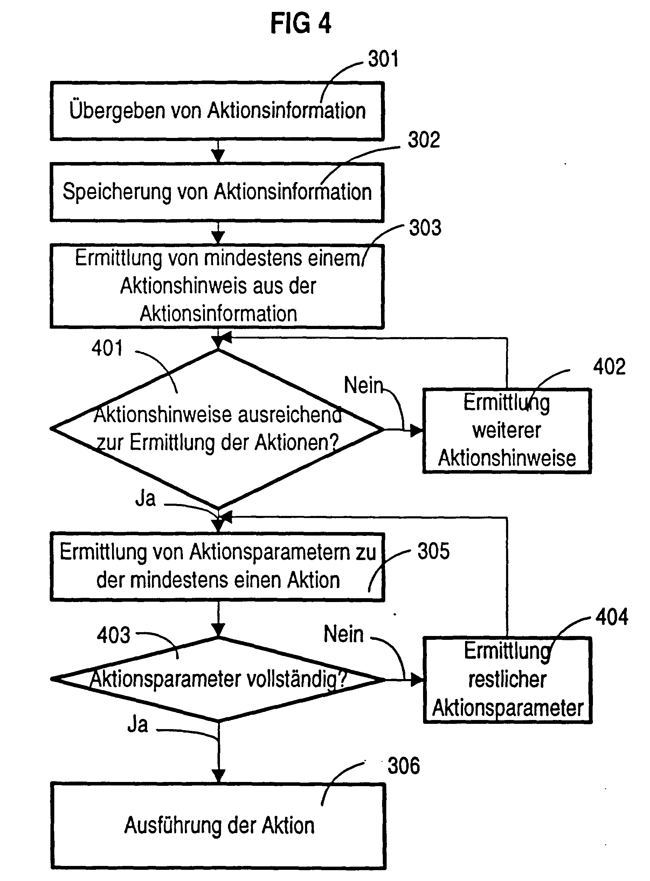

In Figur 4 sind einzelne Verfahrensschritte von Weiterbildungen des Verfahrens dargestellt.

In einer Weiterbildung des Verfahrens wird Information zu der Aktion aus der Informationsdatenbank ID ermittelt und dem Benutzer B über die Ausgabeeinheit AUS dargestellt.

Reichen die in der digitalen Aktionsinformation enthaltenen Aktionshinweise nicht für die Ermittlung mindestens einer Aktion aus 401, so ist es in einer Weiterbildung vorgesehen, weitere Aktionshinweise beispielsweise durch einen Dialog mit dem Benutzer B zu ermitteln 402.

Dies geschieht z. B. unter Verwendung der Aktionsklärungseinheiten AKE, die vorzugsweise derart ausgestaltet ist, daß für die vorgegebenen Aktionen jeweils mindestens ein Ermittlungs-prompt eindeutig zugeordnet ist. Unter dem Ermittlungsprompt sind beispielsweise Fragen zu verstehen, die der jeweiligen Aktion zugeordnet und fest gespeichert sind. Diese Ermittlungsprompts werden dem Benutzer B bei unzureichender Information zur Ermittlung der Aktionen dargestellt. Der Benutzer B gibt über das Eingabemittel EM auf diese Ermittlungs-prompts, also die entsprechenden Fragen, Antworten, die dann wiederum verarbeitet werden, wodurch weitere Aktionshinweise ermittelt werden. Der Dialog wird solange durchgeführt und wiederholt, bis die ermittelten Aktionshinweise und weiteren Aktionshinweise ausreichend sind zur Identifikation der vorgebbaren Anzahl von Aktionen.

Ist die mindestens eine Aktion ermittelt, werden für jede Aktion die Aktionsparameter, die der jeweiligen Aktion zugeordnet sind, ermittelt 305.

Sind jedoch nicht alle benötigten Aktionsparameter vollständig aus der in dem Eingabespeicher ESP ermittelten digitalen Aktionsinformation bekannt bzw. ermittelt worden, was in einem zusätzlichen Verfahrensschritt 403 geprüft wird, werden die restlichen Aktionsparameter beispielsweise von der Parameterklärungseinheit PKE ermittelt 404.

Dies geschieht beispielsweise ebenfalls in einem Dialog mit dem Benutzer B. Für diesen Dialog können wiederum den einzelnen Parametern zugeordnete Prompts, im folgenden als Parameter-Prompts bezeichnet, verwendet werden, die bei notwendiger Ermittlung der entsprechenden Aktionsparameter an den Benutzer B ausgegeben werden und der Benutzer B antwortet auf die entsprechenden Fragen.

Sowohl die Ermittlung weiterer Aktionshinweise 402 als auch die Ermittlung der restlichen Aktionsparameter 404 kann jedoch auch auf andere Weise erfolgen.

Beispielsweise ist es nicht unbedingt notwendig, fest vorgegebene Ermittlungs-Prompts oder Parameter-Prompts den einzelnen Aktionen bzw. Parametern zuzuordnen, wodurch zum einen zwar die Einfachheit in der Durchführung des Verfahrens und in der Anpassung der jeweiligen Anwendung und die Erweiterbarkeit der Aktionen und Parameter erheblich vereinfacht wird, jedoch immer nur fest vorgegebene Fragen an den Benutzer B gestellt werden.

Es ist in einer Weiterbildung des Verfahrens und der Anordnung A vorgesehen, das Mittel GF zur Generierung von Fragen an den Benutzer B zu verwenden. Eine Möglichkeit zur Realisierung des Mittels GF ist beispielsweise in dem Dokument [7] beschrieben.

Die ermittelte Aktion kann in einer Weiterbildung des Verfahrens vorteilhaft zur Steuerung mindestens einer Hintergrundanwendung HA eingesetzt werden.

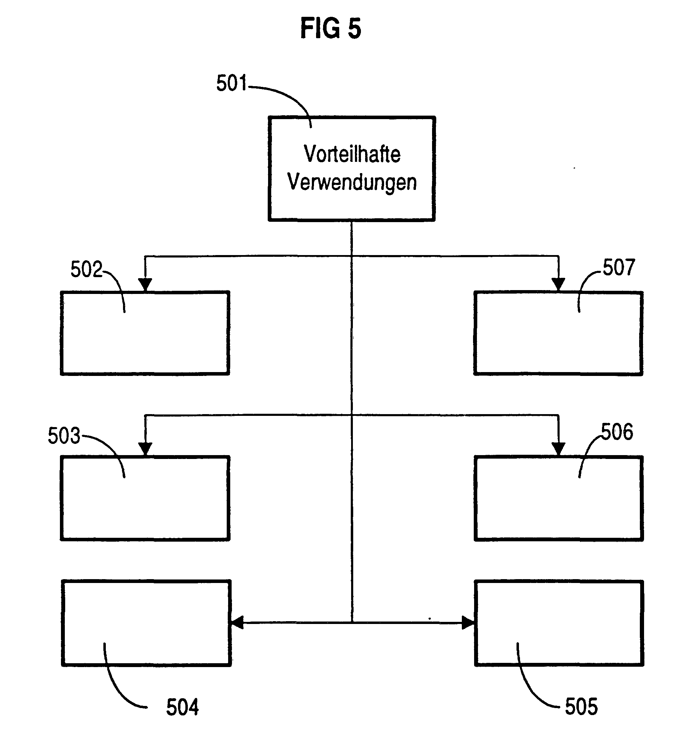

Unter der Hintergrundanwendung HA sind unterschiedlichste Einsatzmöglichkeiten des Verfahrens und der Anordnung A zu verstehen, die im weiteren erläutert werden und in Figur 5 dargestellt sind.

Das Verfahren sowie die Anordnung A können beispielsweise in folgenden Gebieten vorteilhaft eingesetzt werden 501:
- in einem Telefondienst 502,
- in einem Telekauf-System und/oder Tele-Banking-System 503,
- in einem sog. Voice Mail Handling System 504,
- zur Steuerung einer beliebigen Maschine, beispielsweise einer Werkzeugmaschine oder eines Roboters 505,
- zur Steuerung eines Rechners 506,
- in einem Messaging-System einer Nebenstellenanlage eines Telekommunikationssystems 507.

Ferner ist es in einer Weiterbildung des Verfahrens vorteilhaft, daß die Auswertung der digitalen Aktionsinformation, die in dem Eingabespeicher ESP gespeichert wird, von dem Parameterparser PP in bezüglich der Eingabe der Aktionsinformation umgekehrter Reihenfolge ermittelt wird.

Dies bedeutet, daß die Auswertung der Aktionsinformation am Schluß der Aktionsinformation begonnen wird und bis zum Anfang der Aktionsinformation weitergeführt wird. Durch diese Vorgehensweise wird eine Korrektur der Aktionsinformation durch den Benutzer B in einem Satz möglich, was im folgenden noch detalliert erläutert wird.

Zum einfacheren Verständnis wird im folgenden ein sehr einfaches Beispiel aus der Touristikbranche dargestellt. Beispielsweise können in diesem Anwendungsgebiet folgende Aktionen definiert sein:
- Auskunft über Bahnverbindungen;
- Auskunft über Flugverbindungen;
- Auskunft über Schiffsverbindungen;
- Auskunft über Hotelzimmer;
- Restaurantinformation.

Die einzelnen Aktionen können beispielsweise durch folgende Parameter gekennzeichnet sein;
- Bahnauskunft: <Abfahrtsort>, <Ankunftsort>, <Datum>, <Uhrzeit>
- Flugauskunft: <Abfahrtsort>, <Ankunftsort>, <Datum>, <Uhrzeit>
- Schiffsauskunft: <Abfahrtsort>, <Ankunftsort>, <Datum>, <Uhrzeit>
- Hotelauskunft: <Ort>, <Zimmer>, <Art>, <Anzahl der Personen>, <Check in Datum>, <Check out Datum>
- Restaurantinformation: <Ort>, <Stil>, <Kategorie>.

In Form eines Pseudocodes werden im folgenden die einzelnen Aktionen spezifiziert. Hierbei wird jeweils unter dem Punkt 2.1 der Aktion eindeutig eine Nummer zugewiesen, unter dem Punkt 2.2 der jeweilige Ermittlungs-Prompt und unter der Nummer 2.3 die einzelnen Parameterspezifikationen, die sich, jeweils abhängig von der definierten Grammatik in diesem Fall, für vorgegebene Parameter-Prompts in einer Weise darstellen, daß jeweils unter dem Punkt 3.1 und dem Punkt 3.3 die jeweilige Grammatik des jeweiligen Aktionsparameters gegeben ist und unter dem Punkt 3.2 der jeweilige Parameter-Prompt dargestellt ist.

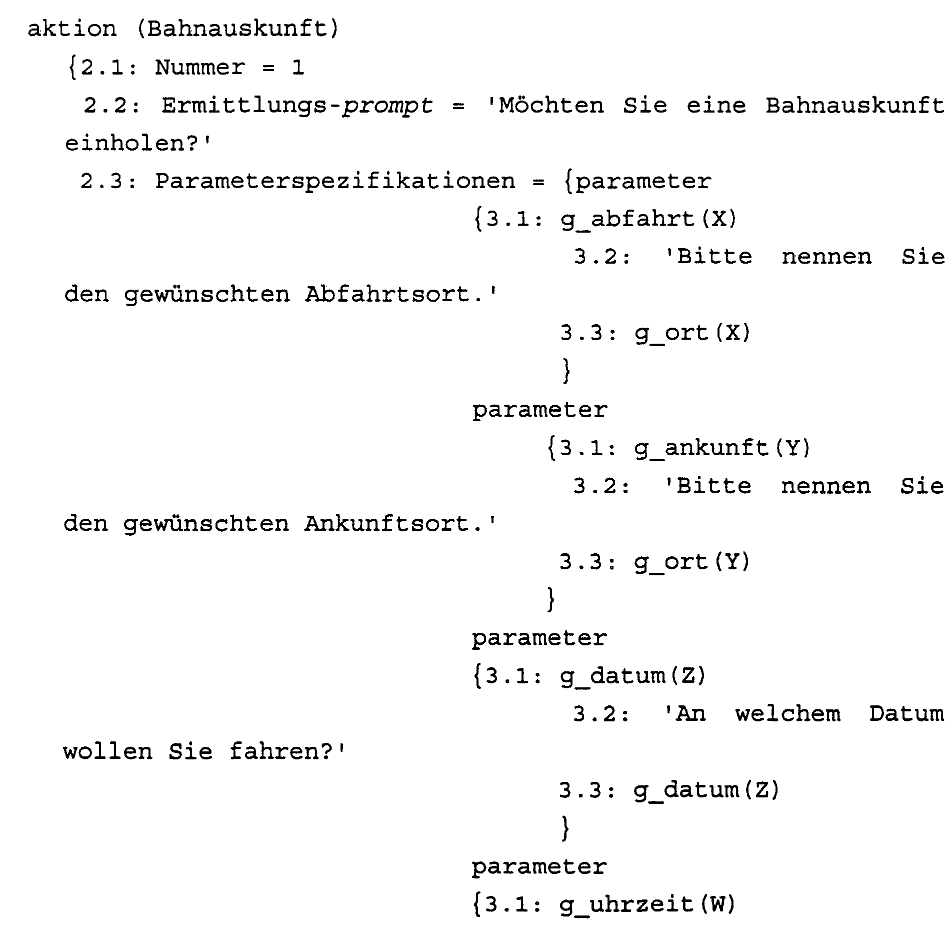

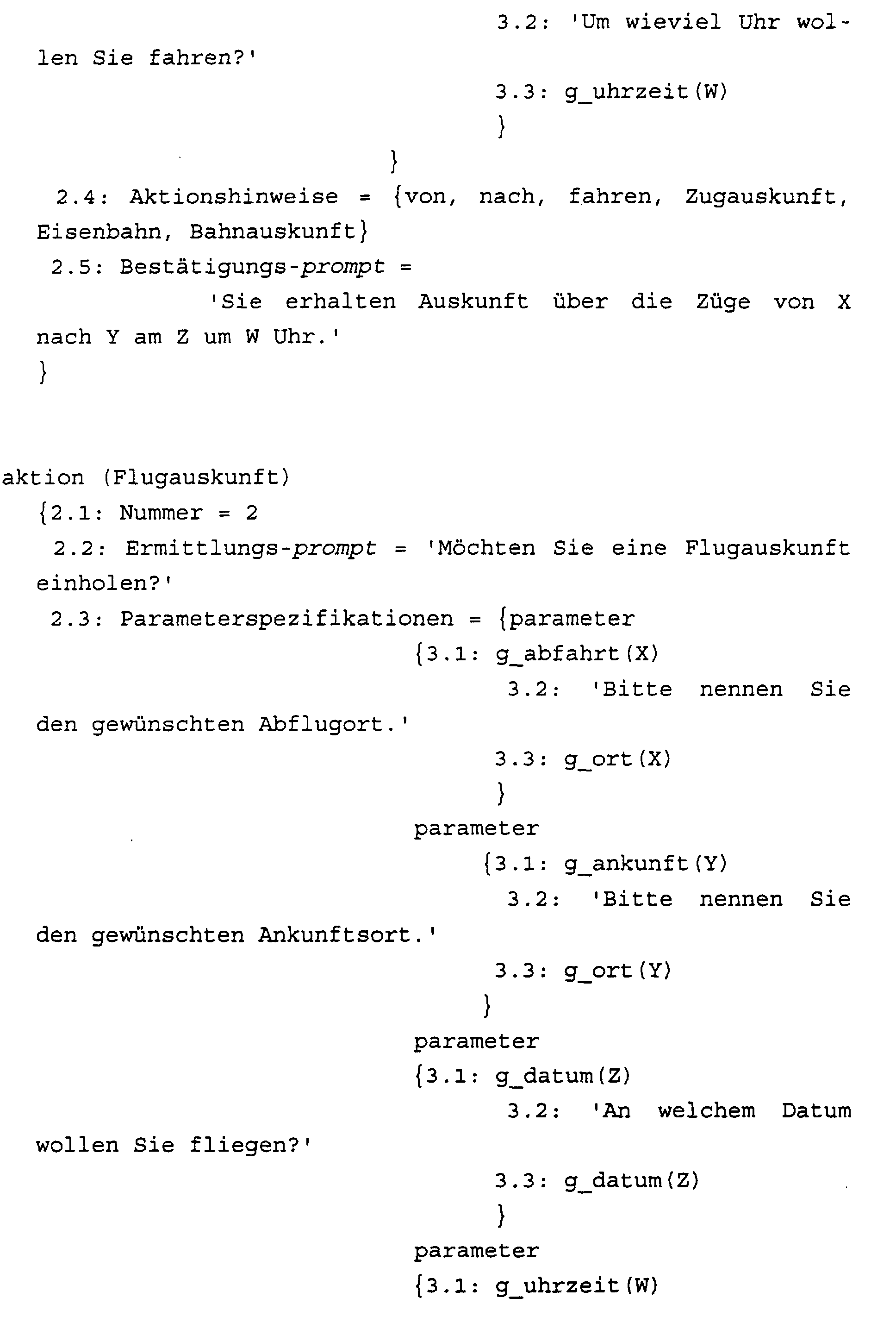

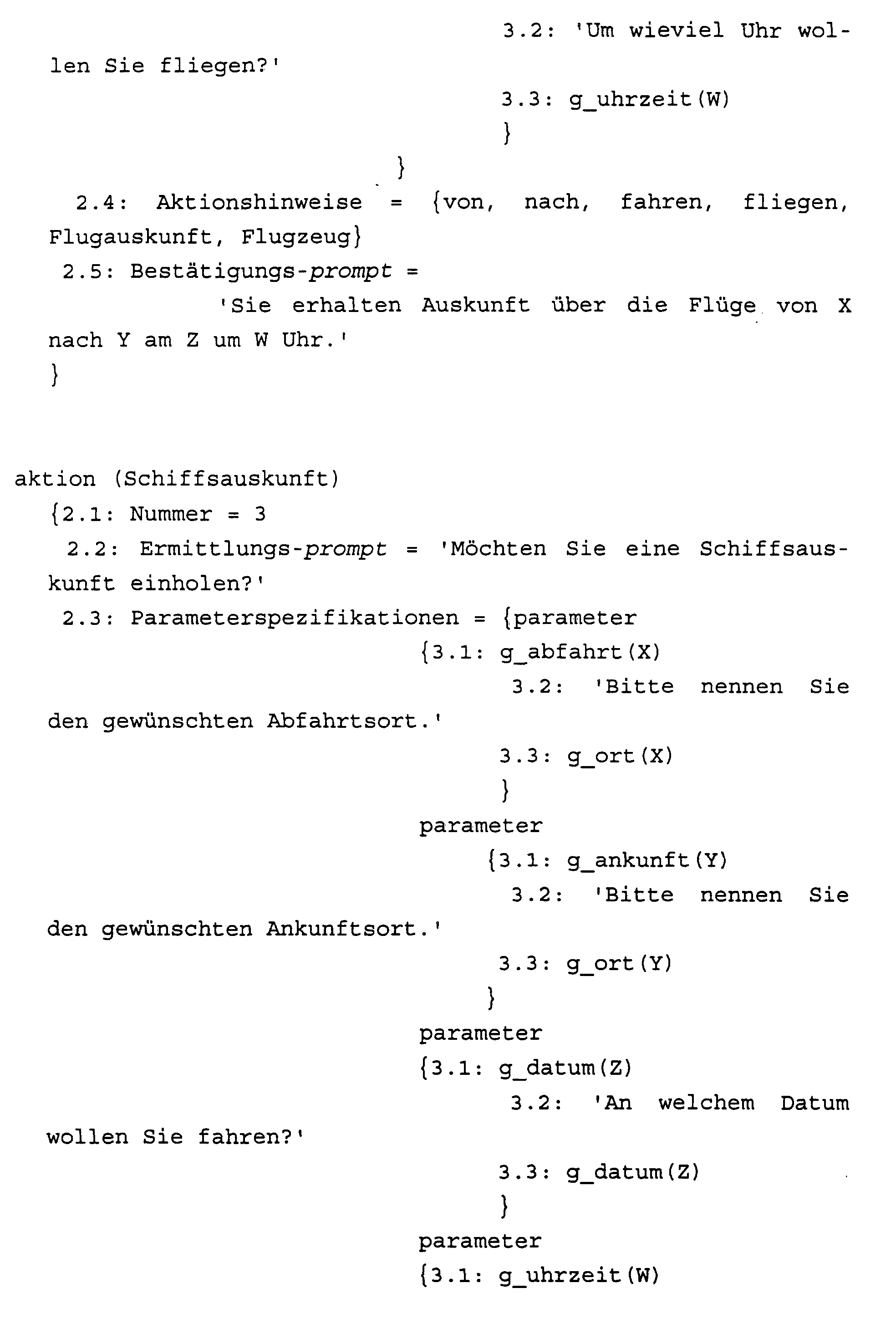

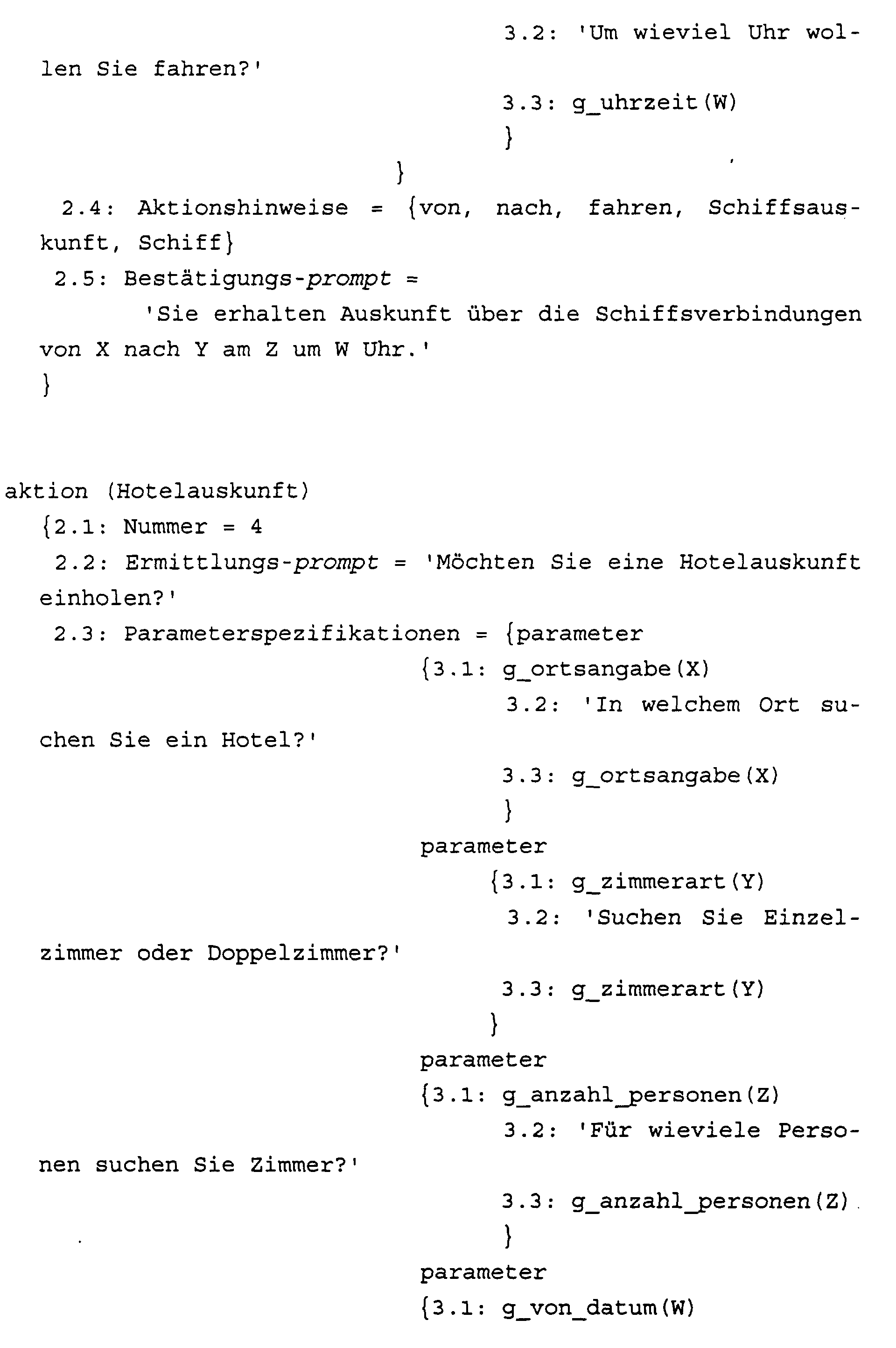

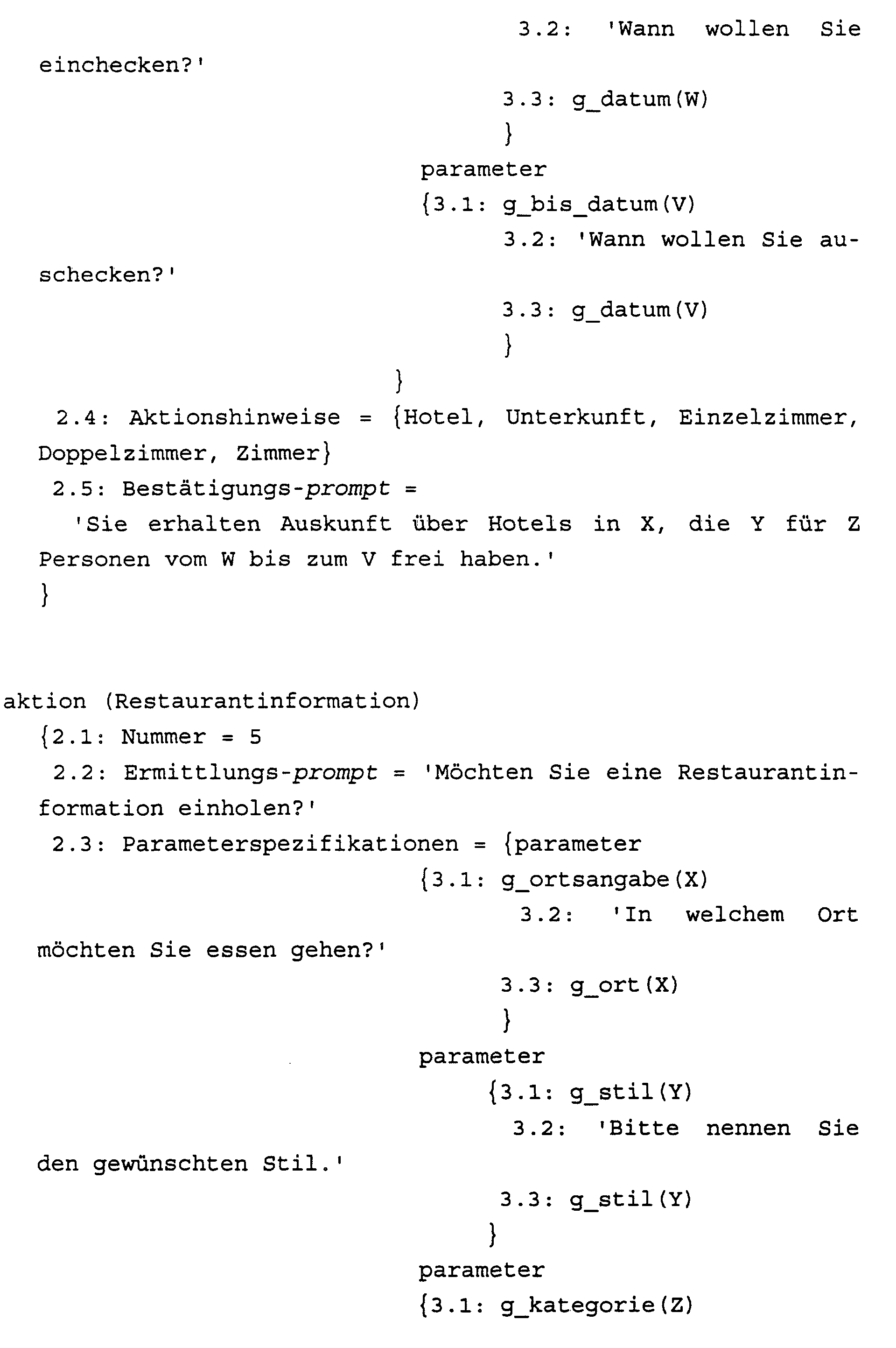

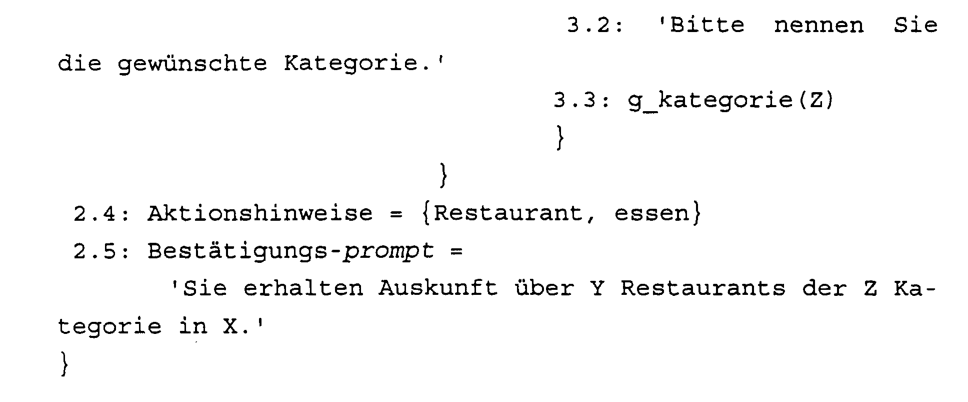

In der folgenden Tabelle sind Schlüsselbegriffe für die einzelnen Aktionen, die durch die entsprechende Nummer in den geschweiften Klammern eindeutig identifiziert sind, beispielhaft aufgeführt.

| | |
|---|---|
| von | {1, 2, 3} |
| nach | {1, 2, 3} |
| fahren | {1, 2, 3} |
| Zugauskunft | {1} |
| Eisenbahn | {1} |
| fliegen | {2} |
| Flugauskunft | {2} |
| Flugzeug | {2} |
| Schiffsauskunft | {3} |
| Schiff | {3} |
| Hotel | {4} |
| Unterkunft | {4} |
| Einzelzimmer | {4} |
| Doppelzimmer | {4} |
| Restaurant | {5} |
| Essen | {5} |

Beispiele für Dialoge des Benutzers B mit der Anordnung A werden im folgenden dargestellt.

### Fall 1:

Der Benutzer B kann seinen Wunsch präzise und vollständig äußern.

Der Benutzer B gibt folgende Informationen ein: "Ich möchte am 1. Januar 1996 um 5.oo Uhr mit dem Zug von München nach Hamburg fahren."

Der erste Aktionsspeicher AS1 enthält unter Verwendung der oben beschriebenen Schlüsselbegriffe und Grammatiken die erste Menge von Aktionen {1}. Der zweite Aktionsspeicher AS2 enthält die zweite Menge von Aktionen {1, 2, 3}.

Da der erste Aktionsspeicher AS1 genau ein Element aufweist, wird direkt von der Anordnung A aus der Informationsdatenbank ID die gesuchte Information ermittelt und beispielsweise dem Benutzer B durch folgende Antwort dargestellt:
"Sie erhalten Auskunft über die Zugfahrten von München nach Hamburg am 1. Januar 1996 um fünf Uhr: "1. Zug, 2. Zug, 3. Zug usw..".

### Fall 2:

Der Benutzer B nennt weder Uhrzeit noch Verkehrsmittel:

Die Aktionsinformation ist beispielsweise folgende:
"Ich möchte am 1. Januar 1996 von München nach Hamburg."

Der erste Aktionsspeicher AS1 enthält in diesem Fall die erste Menge von Aktionen {1,2,3}. Der zweite Aktionsspeicher AS2 enthält die zweite Menge von Aktionen {1,2,3}. In der Anordnung A wird ein Klärungsdialog initiiert, um zwischen den Aktionen {1,2,3} zu unterscheiden.

Hierzu wird beispielsweise der oben beschriebene Ermittlungs-Prompt:
"Möchten Sie eine Bahnauskunft?"
dem Benutzer B ausgegeben.

Der Benutzer B antwortet beispielsweise mit "Nein".

In diesem Fall wird von der Anordnung A beispielsweise folgender Ermittlungsprompt ausgegeben:
"Möchten Sie eine Flugauskunft?"

Beantwortet der Benutzer B diese Frage mit "Ja", so wird ein weiterer Klärungsdialog zur Ermittlung der restlichen, noch fehlenden Aktionsparameter für die Flugauskunft durchgeführt. Hierbei wird beispielsweise zur Ermittlung des Aktionsparameters Uhrzeit der Parameter-Prompt:
"Um wieviel Uhr möchten Sie fliegen?"
dem Benutzer B ausgegeben.

Der Benutzer B antwortet beispielsweise:
"Um fünf Uhr."

Nun hat die Anordnung A ausreichend Information, um die gesuchte Aktion zu ermitteln. Das Ergebnis wird dem Benutzer B beispielsweise in folgender Weise dargestellt:
"Sie erhalten Auskunft über die Flüge von München nach Hamburg am 1. Januar 1996 um fünf Uhr".

### Fall 3:

Der Benutzer B fragt nach mehreren Aktionen auf einmal:
In diesem Fall könnte beispielsweise die Aktionsinformation durch folgende Äußerung gegeben sein:
"Ich möchte nach Hamburg und suche dort ein Doppelzimmer".

Der erste Aktionsspeicher AS1 enthält kein Element, der zweite Aktionsspeicher AS2 enthält die zweite Menge von Aktionen {1,2,3,4}. In der Anordnung A wird ein Klärungsdialog initiiertt, um zwischen den Aktionen {1,2,3,4} zu diskriminieren.
Ermittlungs-Prompt: "Möchten Sie eine Bahnauskunft?"
Benutzer B: "Nein".
Ermittlungs-Prompt: "Möchten Sie eine Flugauskunft?"
Benutzer B: "Ja".
Auch in diesem Fall fehlen einige Aktionsparameter, die über den Klärungsdialog von der Parameterklärungsdialog PKE ermittelt werden.
Parameter-Prompt: "Bitte nennen Sie den gewünschten Abflugsort".
Benutzer B: "München"
Parameter-Prompt: "An welchem Datum möchten Sie fliegen".
Benutzer B: "Am 1. Januar 1996".
Parameter-Prompt: "Um wieviel Uhr möchten Sie fliegen?".
Benutzer B: "Um fünf Uhr".

Das Ergebnis wird dem Benutzer B beispielsweise in folgender Weise dargestellt:
"Sie erhalten Auskunft über die Flüge von München nach Hamburg am 1. Januar 1996 um fünf Uhr."

Es wird in diesem Zusammenhang betont, daß die Aktionsweise nicht nur in Form von Schlüsselbegriffen oder allgemein von Worten vorliegen müssen, sondern sie können auch in Form beliebig vorgebbarer Ereignisse, wie z.B. eines Mausklicks einer Computermaus, der Position eines Cursors oder einer Maus oder ähnlicher Ereignisse, die jeweils für die Anwendung spezifisch definieren werden, vorliegen.

Die Abfrage der Aktionsparameter kann neben natürlichsprachlicher Eingabe durch Pop-Up Menüs oder ähhnliches erfolgen. Die Eingabe eines Benutzers kann auch über Selektion eines Items aus einem Menü oder ähnliches erfolgen. In einer Weiterbildung der Anordnung A sowie das Verfahren ist es vorgesehen, dem Benutzer B zu jeder Zeit, also in jedem Verfahrensschritt die Möglichkeit zu geben, von sich aus eine Korrektur oder eine Ergänzung der Aktionsinformation vorzunehmen. Es wird im folgenden unter Korrekturen in der Aktionsinformation selbst sowie Korrekturen und Ergänzungen während der Aktions -und Parameterklärungsdialoge unterschieden.

Bei Korrekturen in der initalen Äußerung selbst, also in der Aktionsinformation, kann der Benutzer B Angaben korrigieren, in dem er sie zeitlich nach den zu korrigierenden Angaben eingibt.

Ein Beispiel kann hierbei in der folgenden Aktionsinformation liegen:
"Ich möchte um vier Uhr von München nach Hamburg fliegen,
d.h. eigentlich lieber um 4.30 Uhr."

Die Korrekturmöglichkeit wird dadurch realisiert, daß der Parameterparser PP für die Analyse die Angaben der Aktionsinformation jeweils beginnend vom Ende der Aktionsinformation bearbeitet, bzw. den eine Angabe jeweils aus der letzten passenden Phrase bezüglich der definierten Grammatik der jeweiligen Angabe ermittelt.

In diesem Beispiel wäre die passende Uhrzeit 4.30 Uhr.

Für die Korrekturen und Ergänzungen während der Aktions- und Parameterklärungsdialoge ist es vorteilhaft, dem Benutzer B bei jedem Dialogschritt die Möglichkeit zu geben, vorherige Aussagen zu korrigieren und zu ergänzen. Dies kann beispielsweise durch folgende vorteilhafte Erweiterung der Anordnung A erreicht werden.

Der Eingabespeicher ESP für die Aktionsinformation wird zu einem dynamischen Speicher erweitert, in dem jeweils der aktuelle Stand der Dialogführung abgelegt wird. Weiterhin wird ein weiterer dynamischer Speicher für die jeweils zulässigen Aktionen angelegt. Zu Beginn des Dialogs enthält dieser weitere dynamische Speicher alle dem System bekannten Aktionen. In der Aktionsermittlungseinheit AE werden jeweils nur noch die im.Speicher für die jeweils zulässigen Aktionen gespeicherten Aktionen berücksichtigt. Alle anderen Aktionen werden von vornherein ausgeschlossen.

Das folgende einfache Analogbeispiel zeigt die durch die Erweiterung erzielbare Flexibilisierung des Dialogs:

Die Aktionsinformation lautet: "Ich will nach München".
Der Eingabespeicher ESP enthält: "Ich will nach München".
Der erste Aktionsspeicher AS1 enthält die erste Menge von Aktionen {1,2,3}. Der zweite Aktionsspeicher AS2 enthält die zweite Menge von Aktionen {1,2,3}. Der Speicher für zulässige Aktionen enthält {1,2,3,4,5}.

Ermittlungs-Prompt:
"Möchten Sie eine Bahninformation?"

Hiermit wird der Aktionsklärungsdialog gestartet.

Benutzer B: "Nein ich möchte von Hamburg aus fliegen".

Der Benutzer B beantwortet den Ermittlungs-Prompt und nennt zusätzlich die Aktion und Abflugort. Da der erste Ermittlungsprompt von dem Benutzer B negativ beantwortet wurde, wird die Aktion 1 schon ausgeschlossen und der Speicher für zulässige Aktionen enthält nun: {2,3,4,5}.

Der Eingabespeicher ESP enthält: "Ich will nach München Nein ich möchte von Hamburg aus fliegen".

Das Verfahren zur Ermittlung der Aktion wird erneut durchgeführt, nun auf den aktuellen Inhalt des Eingabespeichers ESP. Danach enthält der erste Aktionsspeicher AS1 die erste Menge von Aktionen {2}, der zweite Aktionsspeicher AS2 die zweite Menge von Aktionen {2, 3}. Die Aktion ist nun eindeutig ermittelt und die Aktionsparameter werden aus dem Eingabespeicher ESP ermittelt. Das Ergebnis der Parameteranalyse wird beispielsweise im Eingabespeicher ESP abgelegt.

Danach enthält der Eingabespeicher ESP: "Ich will g_Ankunft (München) Nein ich möchte g_abfahrt (Hamburg) aus fliegen".

Nun werden in einem weiteren Dialog die fehlenden Aktionsparameter ermittelt:
Parameter-Prompt: "An welchem Datum möchten Sie fliegen?"
Benutzer B: "Übermorgen um 7.oo Uhr".

Obwohl der Benutzer B den Parameter-Prompt in umgangssprachlicher Form beantwortet, kann die Eingabe nicht mit der unter 3.3 genannten Grammatik g_Datum analysiert werden. In diesem Fall wird der Eingabespeicher ESP aktualisiert. Der Eingabespeicher ESP enthält nun:
"Ich will g_Ankunft (München) Nein ich möchte g_Hamburg ausfliegen übermorgen 7.00".

Die Ermittlung der Aktion sowie der Aktionsparameter durch den Parameterparser PP wird erneut durchgeführt, wobei der erste Aktionsspeicher AS1 wiederum die erste Menge von geschweiften Aktionen {2} und der zweite Aktionsspeicher AS2 die zweite Menge {2,3} enthält. Die Aktionsparameter g_Ankunft (München) und g_Abfahrt Hamburg sind bereits bekannt und werden übernommen.

Datum und Uhrzeit werden aus der in dem Eingabespeicher ESP gespeicherten Aktionsinformation ermittelt. Das Ergebnis der Parameteranalyse wird in dem Eingabespeicher ESP abgelegt. Danach enthält der Eingabespeicher ESP abgelegt: Danach enthält der Eingabespeicher ESP:
"Ich will g_Ankunf München Nein ich möchte g_Abfahrt Hamburg ausfliegen g_Datum (Übermorgen) g_uhrzeit 7.00".

Nach Ermittlung der Aktion wird eventuell bei der Durchführung der Aktion aus der Informationsdatenbank ID ermittelt und die Information beispielsweise in folgender Weise dem Benutzer B dargestellt:
"Ihre Flugverbindung am 21.12.1995 um sieben Uhr von München nach Hamburg wird gesucht."

In Figur 6 ist der Benutzer B mit der Anordnung A zur Aktionsermittlung sowie einigen Weiterbildungen dargestellt. Weiterhin ist durch einen Pfeil AI die Aktionsinformation, die von dem Benutzer B an die Anordnung A übergeben wird, dargestellt. Ferner ist das Eingabemittel EM sowie eine Ausgabeeinheit AUS dargestellt. Ferner ist symbolhaft ein Klärungsdialog KD durch einen Doppelpfeil dargestellt. Der Klärungsdialog KD kann sowohl zur Ermittlung der Aktionen als auch zur Ermittlung der Aktionsparameter verwendet werden.

Ferner ist ein Schlüsselbegriffseditor SE sowie die Steuereinheit STE zur Steuerung einer Hintergrundanwendung HA dargestellt.

Im Rahmen dieses Dokuments wurden folgende Veröffentlichungen zitiert:
[1] J. Markowitz, Using Speech Recognition, Prentice Hall PTR, ISBN 0-13-186321-5, S. 206 - 213, 1996
[2] Goddeau, D., E. Brill, J. Glass, C. Pao, M. Phillips, J. Polifroni, S. Seneff and V. Zue, 1994: GALAXY: A Human-Language Interface to On-line Travel Information. Proc. International Conference on Spoken Language Processing, Yokohama, S. 1 - 4
[3] Pulman, S. G., H. Alshawi, D. M. Carter, R. S. Crouch, M. Rayner and A. G. Smith, 1993: CLARE: A Combined Language and Reasoning Engine, Proc. of the JFIT conference, S. 1 - 8.
[4] Goddeau, D., E. Brill, J. Glass, C. Pao, M. Phillips, J. Polifroni, S. Seneff and V. Zue, 1994: GALAXY: A Human-Language Interface to On-line Travel Information. Proc. International Conference on Spoken Language Processing, Yokohama, S. 1 - 4.
[5] G. Ruske, Automatische Spracherkennung, Oldenbourg Verlag, München, ISBN 3-486-20877-2, 1. Auflage, S. 1 - 10, 1988
[6] Naumann, Sven und Hagen Langer, 1994: Parsing, Stuttgart, Teubner, 1. Auflage, ISBN 3-519-02139-0, S. 155 - 166.
[7] Caspari, R., 1993, Bottom Up Generation from Flat Semantic Structures, Proc. Deklarative und prozedurale Aspekte der Sprachverarbeitung, Deutsche Gesellschaft für Sprachverarbeitung, Sektion Computerlinguistik, 4. Fachtagung, S. 1 - 6.

## Patentansprüche

1. Anordnung zur Aktionsermittlung unter Verwendung einer digitalen Aktionsinformation, die der Anordnung von einem Benutzer übergeben wird,
- bei der mindestens ein Eingabemittel (EM) zur Eingabe der Aktionsinformation vorgesehen ist,
- bei der ein Eingabespeicher (ESP) zur Speicherung der Aktionsinformation vorgesehen ist,
- bei der eine Aktionsermittlungseinheit (AE) vorgesehen ist zur Ermittlung mindestens einer Aktion, auf die durch einen ebenfalls in der Aktionsermittlungseinheit ermittelten Aktionshinweis hingewiesen wird,
- bei der die Aktionsermittlungseinheit (AE) derart ausgestaltet ist, daß eine erste Menge von Aktionen gebildet wird, in der die Aktionen gespeichert werden, bei denen alle Aktionshinweise mit mindestens einem Teil von vorgebbaren Schlüsselbegriffen übereinstimmen, die einer Aktion zugeordnet sind,
- bei der die Aktionsermittlungseinheit (AE) derart ausgestaltet ist, daß eine zweite Menge von Aktionen gebildet wird, in der die Aktionen gespeichert werden, bei denen mindestens ein Teil der Aktionshinweise mit mindestens dem Teil der vorgebbaren Schlüsselbegriffe übereinstimmen,
- bei der die Aktionsermittlungseinheit (AE) derart ausgestaltet ist, daß die erste Menge von Aktionen und/oder die zweite Menge von Aktionen als Grundlage zur eindeutigen Ermittlung der Aktion verwendet wird, und
- bei der ein Parameterparser (PP) vorgesehen ist, mit dem aus der Aktionsinformation vorgebbare Aktionsparameter, die einer Aktion zugeordnet werden und die zur Ausführung der Aktion verwendet werden, ermittelt werden.

2. Anordnung nach Anspruch 1,
bei der das mindestens eine Eingabemittel (EM) als Spracherkennungseinheit und/oder als taktile Eingabeeinheit ausgestaltet ist.

3. Anordnung nach Anspruch 1 oder 2,
- bei der für den Fall, daß die erste Menge genau eine Aktion enthält, diese Aktion die ermittelte Aktion ist,
- bei der eine Aktionsklärungseinheit (AKE) vorgesehen ist zur Ermittlung mindestens eines weiteren Aktionshinweises von dem Benutzer, für den Fall, daß die erste Menge nicht genau eine Aktion enthält, und
- bei der die Aktionsklärungseinheit (AKE) derart ausgestaltet ist, daß für den Fall, daß die erste Menge keine Aktion enthält, die Ermittlung des weiteren Aktionshinweises unter Berücksichtigung der in der zweiten Menge enthaltenen Aktionen erfolgt.

4. Anordnung nach einem der Ansprüche 1 bis 3,
bei der eine Parameterklärungseinheit (PKE) vorgesehen ist zur Ermittlung weiterer Aktionsparameter von dem Benutzer.

5. Anordnung nach einem der Ansprüche 1 bis 4,
bei der ein Schlüsselworteditor (SE) vorgesehen ist zur Eingabe von Schlüsselbegriffen durch den Benutzer.

6. Anordnung nach einem der Ansprüche 2 bis 5,
bei der ein Mittel (GF) zur Generierung von Fragen an den Benutzer zur Ermittlung weiterer Aktionshinweise und/oder weiterer Aktionsparameter vorgesehen ist.

7. Anordnung nach einem der Ansprüche 1 bis 6,
bei der eine Informationsdatenbank (ID) vorgesehen ist, in der Information anhand der Aktion und der Aktionsparameter ermittelt wird.

8. Anordnung nach einem der Ansprüche 1 bis 7,
bei der mindestens eine Ausgabeeinheit (AUS) vorgesehen ist zur Ausgabe von Information.

9. Anordnung nach einem der Ansprüche 1 bis 8,
bei der eine Steuerungseinheit (STE) vorgesehen ist zur Steuerung einer Hintergrundanwendung (HA) unter Verwendung der ermittelten Information.

10. Verfahren zur Aktionsermittlung unter Verwendung einer digitalen Aktionsinformation, die mindestens einen Aktionshinweis aufweist, durch einen Rechner,
- bei dem die Aktionsinformation von einem Benutzer an den Rechner übergeben wird (301),
- bei dem die Aktionsinformation gespeichert wird (302),
- bei dem aus vorgebbaren Aktionen, denen eine vorgebbare Anzahl Aktionsparameter zugeordnet sind, anhand des mindestens einen Aktionshinweises in der Aktionsinformation mindestens eine Aktion bestimmt wird (303),
- bei dem eine erste Menge von Aktionen, bei denen alle Aktionshinweise mit den Schlüsselbegriffen übereinstimmen, und eine zweite Menge von Aktionen, bei denen mindestens ein Teil der Aktionshinweise mit den Schlüsselbegriffen übereinstimmen, gespeichert werden, und
- bei dem die erste Menge von Aktionen und/oder die zweite Menge von Aktionen als Grundlage zur eindeutigen Ermittlung der Aktion verwendet wird.
- bei dem für die Aktion die Aktionsparameter ermittelt werden (304), die einer Aktion zugeordnet werden und die zur Ausführung der Aktion verwendet werden, und
- bei dem die ermittelte Aktion durchgeführt wird.

11. Verfahren nach Anspruch 10,
bei dem Information für die Aktion anhand der Aktionsparameter und einer Informationsdatenbank (ID) ermittelt wird (305).

12. Verfahren nach Anspruch 10 oder 11,
- bei dem die Aktionsinformation durch den Benutzer eingesprochen wird, und
- bei dem die Aktionsinformation in einer Spracherkennungseinheit erkannt wird.

13. Verfahren nach einem der Ansprüche 10 bis 11,
bei dem die Aktionsinformation durch den Benutzer mit einer taktilen Eingabeeinheit eingegeben wird.

14. Verfahren nach einem der Ansprüche 10 bis 13,
bei dem für den Fall, daß der Aktionshinweis nicht zur eindeutigen Bestimmung einer Aktion ausreicht, weitere Aktionshinweise in einem vorgebbaren, in dem Rechner gespeicherten Dialog mit dem Benutzer ermittelt werden.

15. Verfahren nach einem der Ansprüche 10 bis 14,
bei dem für den Fall, daß für die bestimmte Aktion die der Aktion zugeordneten Aktionsparameter nicht vollständig ermittelt wurden, die restlichen Aktionsparameter in einem vorgebbaren, in dem Rechner gespeicherten Dialog mit dem Benutzer ermittelt werden.

16. Verfahren nach einem der Ansprüche 10 bis 15,
bei dem die Bestimmung der Aktion in der Weise erfolgt, daß der mindestens eine Aktionshinweis mit Schlüsselbegriffen, die den Aktionen eindeutig zugeordnet wurden, verglichen werden und die Aktion aus der vorgebbaren Anzahl von Aktionen bestimmt wird, deren Schlüsselbegriffe bezüglich eines Ähnlickeitsmaßes am besten mit den Aktionshinweisen übereinstimmen.

17. Verfahren nach einem der Ansprüche 10 bis 16,
bei dem in dem Parameterparser (PP) die Aktionsparameter aus der Aktionsinformation, die in dem Eingabespeicher (ESP) gespeichert wurden, in bezüglich der Eingabe umgekehrter Reihenfolge ermittelt werden.

18. Verfahren nach einem der Ansprüche 10 bis 17,
bei dem mit der ermittelten Information eine Hintergrundanwendung (HA) gesteuert wird.

19. Verwendung der Anordnung nach einem der Ansprüche 1 bis 9 und/oder des Verfahrens nach einem der Ansprüch 10 bis 18 in einem Telefondienst.

20. Verwendung der Anordnung nach einem der Ansprüche 1 bis 9 und/oder des Verfahrens nach einem der Ansprüch 10 bis 18 in einem Telekauf-System und/oder Tele-Banking-System.

21. Verwendung der Anordnung nach einem der Ansprüche 1 bis 9 und/oder des Verfahrens nach einem der Ansprüch 10 bis 18 in einem Voice Mail Handling System.

22. Verwendung der Anordnung nach einem der Ansprüche 1 bis 9 und/oder des Verfahrens nach einem der Ansprüch 10 bis 18 zur Steuerung einer Maschine.

23. Verwendung der Anordnung nach einem der Ansprüche 1 bis 9 und/oder des Verfahrens nach einem der Ansprüch 10 bis 18 zur Steuerung eines Rechners.

## Claims

1. Arrangement for ascertaining actions using digital action information which is transferred to the arrangement by a user,
- in which at least one input means (EM) is provided for inputting the action information,
- in which an input memory (ESP) is provided for storing the action information,
- in which an action ascertainment unit (AE) is provided for ascertaining at least one action to which reference is made by an action instruction, which is likewise ascertained in the action ascertainment unit,
- in which the action ascertainment unit (AE) is designed such that a first quantity of actions is formed which stores the actions for which all the action instructions are concurrent with at least one portion of prescribable key terms associated with an action,
- in which the action ascertainment unit (AE) is designed such that a second quantity of actions is formed which stores the actions for which at least one portion of the action instructions is concurrent with at least the portion of prescribable key terms,
- in which the action ascertainment unit (AE) is designed such that the first quantity of actions and/or the second quantity of actions is used as a basis for uniquely ascertaining the action, and
- in which a parameter parser (PP) is provided which is used to ascertain, from the action information, prescribable action parameters which are allocated to an action and are used for executing the action.

2. Arrangement according to Claim 1,
in which the at least one input means (EM) is in the form of a voice recognition unit and/or a tactile input unit.

3. Arrangement according to Claim 1 or 2,
- in which, if the first quantity contains exactly one action, this action is the ascertained action,
- in which an action clarification unit (AKE) is provided for ascertaining at least one further action instruction from the user if the first quantity does not contain exactly one action, and
- in which the action clarification unit (AKE) is designed such that, if the first quantity does not contain any action, the further action instruction is ascertained by taking into account the actions contained in the second quantity.

4. Arrangement according to one of Claims 1 to 3,
in which a parameter clarification unit (PKE) is provided for ascertaining further action parameters from the user.

5. Arrangement according to one of Claims 1 to 4,
in which a keyword editor (SE) is provided for the input of key terms by the user.

6. Arrangement according to one of Claims 2 to 5,
in which a means (GF) is provided for generating questions to the user for ascertaining further action instructions and/or further action parameters.

7. Arrangement according to one of Claims 1 to 6,
in which an information database (ID) is provided in which information is ascertained using the action and the action parameters.

8. Arrangement according to one of Claims 1 to 7,
in which at least one output unit (AUS) is provided for outputting information.

9. Arrangement according to one of Claims 1 to 8,
in which a control unit (STE) is provided for controlling a background application (HA) using the ascertained information.

10. Method for the ascertainment of actions by a computer using digital action information which has at least one action instruction,
- in which the action information is transferred (301) from a user to the computer,
- in which the action information is stored (302),
- in which the at least one action instruction in the action information is used to determine (303) at least one action from prescribable actions which have a prescribable number of associated action parameters,
- in which a first quantity of actions for which all the action instructions are concurrent with the key terms and a second quantity of actions for which at least one portion of the action instructions is concurrent with the key terms are stored, and
- in which the first quantity of actions and/or the second quantity of actions is used as a basis for uniquely ascertaining the action,
- in which the action parameters ascertained (304) for the action are those which are allocated to an action and are used for performing the action, and
- in which the ascertained action is carried out.

11. Method according to Claim 10,
in which information for the action is ascertained (305) using the action parameters and an information database (ID).

12. Method according to Claim 10 or 11,
- in which the action information is entered by the user speaking, and
- in which the action information is recognized in a voice recognition unit.

13. Method according to one of Claims 10 or 11,
in which the action information is input by the user using a tactile input unit.

14. Method according to one of Claims 10 to 13,
in which, if the action instruction is not sufficient for uniquely determining an action, further action instructions are ascertained in a prescribable dialogue with the user which is stored in the computer.

15. Method according to one of Claims 10 to 14,
in which, if the action parameters associated with the action have not been ascertained completely for the particular action, the remainder of the action parameters are ascertained in a prescribable dialogue with the user which is stored in the computer.

16. Method according to one of Claims 10 to 15,
in which the action is determined by comparing the at least one action instruction with key terms which have been uniquely allocated to the actions, and determining the action from the prescribable number of actions whose key terms are the most concurrent with the action instructions in respect of a degree of similarity.

17. Method according to one of Claims 10 to 16,
in which the parameter parser (PP) ascertains the action parameters from the action information, which has been stored in the input memory (ESP), in the reverse order of input.

18. Method according to one of Claims 10 to 17,
in which the ascertained information is used to control a background application (HA).

19. Use of the arrangement according to one of Claims 1 to 9 and/or of the method according to one of Claims 10 to 18 in a telephone service.

20. Use of the arrangement according to one of Claims 1 to 9 and/or of the method according to one of Claims 10 to 18 in a telepurchasing system and/or telebanking system.

21. Use of the arrangement according to one of Claims 1 to 9 and/or of the method according to one of Claims 10 to 18 in a voicemail handling system.

22. Use of the arrangement according to one of Claims 1 to 9 and/or of the method according to one of Claims 10 to 18 for controlling a machine.

23. Use of the arrangement according to one of Claims 1 to 9 and/or of the method according to one of Claims 10 to 18 for controlling a computer.

## Revendications

1. Dispositif pour la détermination d'action en utilisant. une information d'action numérique qui est transmise au dispositif par un utilisateur,
- dans lequel il est prévu au moins un moyen d'entrée (EM) pour l'entrée de l'information d'action,
- dans lequel il est prévu une mémoire d'entrée (ESP) pour la mémorisation de l'information d'action,
- dans lequel il est prévu une unité de détermination d'action (AE) pour la détermination d'au moins une action à laquelle renvoie un indice d'action également déterminé dans l'unité de détermination d'action,
- dans lequel l'unité de détermination d'action (AE) est conçue de manière à former un premier ensemble d'actions dans lequel sont mémorisées les actions pour lesquelles tous les indices d'action coïncident avec au moins une partie des termes clés pouvant être prescrits et associés à une action,
- dans lequel l'unité de détermination d'action (AE) est conçue de manière à former un deuxième ensemble d'actions dans lequel sont mémorisées les actions pour lesquelles au moins une partie des indices d'action coïncide avec au moins la partie des termes clés pouvant être prescrits,
- dans lequel l'unité de détermination d'action (AE) est conçue de telle sorte que le premier ensemble d'actions et/ou le deuxième ensemble d'actions sont utilisés comme base pour la détermination sans équivoque de l'action, et
- dans lequel il est prévu un programme d'analyse syntaxique de paramètres (PP) avec lequel on détermine à partir de l'information d'action des paramètres d'action pouvant être prescrits qui sont associés à une action et qui sont utilisés pour la mise en oeuvre de l'action.

2. Dispositif selon la revendication 1,
dans lequel le ou les moyens d'entrée (EM) sont conçus comme une unité de reconnaissance de la parole et/ou comme une unité d'entrée tactile.

3. Dispositif selon la revendication 1 ou 2,
- dans lequel, pour le cas où le premier ensemble contient exactement une action, cette action est l'action déterminée,
- dans lequel, pour le cas où le premier ensemble ne contient pas exactement une action, il est prévu une unité d'éclaircissement d'action (AKE) pour obtenir de l'utilisateur au moins un autre indice d'action, et
- dans lequel l'unité d'éclaircissement d'action (AKE) est conçue de telle sorte que, pour le cas où le premier groupe ne contient aucune action, la détermination de l'autre indice d'action s'effectue en tenant compte des actions contenues dans le deuxième ensemble.

4. Dispositif selon l'une des revendications 1 à 3,
dans lequel il est prévu une unité d'éclaircissement de paramètres (PKE) pour obtenir de l'utilisateur d'autres paramètres d'action.

5. Dispositif selon l'une des revendications 1 à 4,
dans lequel il est prévu un éditeur de termes clés (SE) pour l'entrée de termes clés par l'utilisateur.

6. Dispositif selon l'une des revendications 2 à 5,
dans lequel il est prévu un moyen (GF) pour produire des questions adressées à l'utilisateur afin de déterminer d'autres indices d'action et/ou d'autres paramètres d'action.

7. Dispositif selon l'une des revendications 1 à 6,
dans lequel il est prévu une base de données d'informations (ID) dans laquelle l'information est déterminée à l'aide de l'action et des paramètres d'action.

8. Dispositif selon l'une des revendications 1 à 7,
dans lequel il est prévu au moins une unité de sortie (AUS) pour la sortie d'informations.

9. Dispositif selon l'une des revendications 1 à 8,
dans lequel il est prévu une unité de commande (STE) pour commander une application de fond (HA) en utilisant l'information déterminée.

10. Procédé pour la détermination d'action en utilisant une information d'action numérique, qui comporte au moins un indice d'action, par un ordinateur,
- dans lequel un utilisateur transmet l'information d'action à l'ordinateur (301),
- dans lequel on mémorise l'information d'action (302),
- dans lequel, parmi des actions pouvant être prescrites auxquelles est associé un nombre pouvant être prescrit de paramètres d'action, on détermine au moins une action à l'aide du ou des indices d'action dans l'information d'action (303),
- dans lequel on mémorise un premier ensemble d'actions pour lesquelles tous les indices d'action coïncident avec les termes clés et un deuxième ensemble d'actions pour lesquelles au moins une partie des indices d'action coïncide avec les termes clés, et
- dans lequel on utilise le premier ensemble et/ou le deuxième ensemble d'actions comme base pour la détermination sans équivoque de l'action,
- dans lequel on détermine pour l'action les paramètres d'action (304) qui sont associés à une action et qui sont utilisés pour la mise en oeuvre de l'action, et
- dans lequel on met en oeuvre l'action déterminée.

11. Procédé selon la revendication 10, dans lequel on détermine l'information pour l'action à l'aide des paramètres d'action et d'une base de données d'informations (ID) (305).

12. Procédé selon la revendication 10 ou 11,
- dans lequel l'information d'action est énoncée par l'utilisateur, et
- dans lequel l'information d'action est reconnue dans une unité de reconnaissance de la parole.

13. Procédé selon l'une des revendications 10 à 11,
dans lequel l'information d'action est entrée par l'utilisateur au moyen d'une unité d'entrée tactile.

14. Procédé selon l'une des revendications 10 à 13,
dans lequel, pour le cas où l'indice d'action ne suffit pas à déterminer sans équivoque une action, on détermine d'autres indices d'action lors d'un dialogue avec l'utilisateur qui peut être prédéterminé et qui est mémorisé dans l'ordinateur.

15. Procédé selon l'une des revendications 10 à 14,
dans lequel, pour le cas où les paramètres d'action associés à l'action n'ont pas été complètement déterminés pour l'action déterminée, les paramètres d'action restants sont déterminés lors d'un dialogue avec l'utilisateur qui peut être prédéterminé et qui est mémorisé dans l'ordinateur.

16. Procédé selon l'une des revendications 10 à 15,
dans lequel la détermination de l'action s'effectue de telle sorte qu'on compare le ou les indices d'action avec des termes clés qui sont associés sans équivoque aux actions et on détermine l'action parmi le nombre pouvant être prescrit d'actions dont les termes clés coïncident le mieux avec les indices d'action selon une mesure de ressemblance.

17. Procédé selon l'une des revendications 10 à 16,
dans lequel, dans le programme d'analyse syntaxique de paramètres (PP), on détermine les paramètres d'action à partir de l'information d'action, qui a été mémorisée dans la mémoire d'entrée (ESP), dans l'ordre inverse de l'ordre d'entrée.

18. Procédé selon l'une des revendications 10 à 17,
dans lequel on commande une application de fond (HA) avec l'information déterminée.

19. Utilisation du dispositif selon l'une des revendications 1 à 9 et/ou du procédé selon l'une des revendications 10 à 18 dans un service téléphonique.

20. Utilisation du dispositif selon l'une des revendications 1 à 9 et/ou du procédé selon l'une des revendications 10 à 18 dans un système d'achat à distance et/ou dans un système de banque à distance.

21. Utilisation du dispositif selon l'une des revendications 1 à 9 et/ou du procédé selon l'une des revendications 10 à 18 dans un système dit Voice Mail Handling System.

22. Utilisation du dispositif selon l'une des revendications 1 à 9 et/ou du procédé selon l'une des revendications 10 à 18 pour la commande d'une machine.

23. Utilisation du dispositif selon l'une des revendications 1 à 9 et/ou du procédé selon l'une des revendications 10 à 18 pour la commande d'un ordinateur.
